# EUROPÄISCHE PATENTANMELDUNG

(11) **EP 1 762 433 A2**
(43) Veröffentlichungstag der Anmeldung: **14.03.2007**
(21) Anmeldenummer: 06018640.0
(22) Anmeldetag: 06.09.2006
(51) Int. Cl.: B60Q 1/30

(54) **Heckleuchtenanordnung, insbesondere für Nutzfahrzeuge**

(30) Priorität: 12.09.2005 DE 102005043510; 16.02.2006 DE 102006007101
(71) Anmelder: KOMPLED GmbH & Co. KG, 89081 Ulm (DE)
(72) Erfinder: Koch, Josef, 89081 Ulm (DE)
(74) Vertreter: Weber, Gerhard

(57) **Zusammenfassung**

Für eine Heckleuchtenanordnung, insbesondere für Nutzfahrzeuge, wird vorgeschlagen, ein Leuchtengehäuse mit Leuchtdioden als Lichtquellen für unterschiedliche Leuchtenfunktionen und einen Dreieckreflektor vorteilhaft zu kombinieren.

## Beschreibung

Die Erfindung betrifft eine Heckleuchtenanordnung und eine Heckleuchte, insbesondere für Nutzfahrzeuge.

Heckleuchtenanordnungen für Nutzfahrzeuge enthalten typischerweise mehrere Leuchtenfunktionen, wie Fahrrückleuchte, Bremsleuchte, Blinkleuchte, Rückfahrscheinwerfer und Nebelschlussleuchte sowie passive Reflektoren.

Fahrzeugaußenleuchten an Nutzfahrzeugen sind typischerweise als eigenständige geschlossene Leuchtengehäuse ausgeführt und, im Unterschied zu Personenkraftwagen mit in Karrosserieöffnungen integrierte Fahrzeugleuchten, so an dem Nutzfahrzeug befestigt, dass die Gehäuseaußenfläche überwiegend oder vollständig Umgebungseinflüssen ausgesetzt ist. Eine Fahrzeugaußenleuchte in Form einer Seitenmarkierungsleuchte ist z. B. aus der DE 203 04 930 U1 bekannt. Das Leuchtengehäuse besteht aus einer topfförmigen transparenten Lichtscheibe und einem Bodenteil, welche entlang einer Gehäusefuge zusammengefügt sind. Eine Lichtquellenanordnung ist mit einem durch eine Öffnung im Bodenteil geführten Kabel in einer dem Innenraum des Gehäusebodens zugewandten Mulde in Polyurethan eingegossen. An die Gehäusefuge ist ein Kunststoffmaterial angespritzt.

Reflektorflächen sind bei Seitenmarkierungsleuchten typischerweise in der Lichtscheibe ausgeformt wie z.B. in der DE 101 59 064 A1 oder bei Heckleuchtenanordnungen als rechteckige oder dreieckige Reflektoren seitlich von den Leuchtengehäusen von Heckleuchten angeordnet wie z.B. in der DE 195 08 86 A.

Es sind auch Heckleuchtenanordnungen mit mehreren in einem gemeinsamen topfförmigen Gehäuse in getrennten Kammern angeordneten Einzelleuchten bekannt, welche durch für die verschiedenen Leuchtenfunktionen unterschiedlich eingefärbte Lichtscheiben abgedeckt sind.

Der Erfindung liegt die Aufgabe zugrunde, eine vorteilhafte Heckleuchtenanordnung und eine Heckleuchte insbesondere für Nutzfahrzeuge anzugeben.

Erfindungsgemäße Lösungen sind in den unabhängigen Patenansprüchen beschrieben. Die abhängigen Ansprüche enthalten vorteilhafte Ausgestaltungen und Weiterbildungen der Erfindung.

Die Integration des Reflektors in das Leuchtengehäuse ermöglicht einen besonders kompakten und montagefreundlichen Aufbau der Heckleuchtenanordnung. Die Kombination der Verwendung von Leuchtdioden als Lichtquellen und der Integration des Reflektors ist von besonderem Vorteil, da durch mehrere Leuchtdioden für eine Leuchtenfunktion in einer Fläche neben dem Reflektor angeordnet werden können und dadurch eine besonders vorteilhafte Ausnutzung der Gesamtfläche des Leuchtengehäuses oder insbesondere der Lichtscheibe in Draufsicht auf die Lichtscheibe auf einfache Weise möglich ist. Ferner ergänzen sich die flache Bauform der Leuchtdiodenanordnung auf einer ebenen Schaltungsplatine und die flache Bauform eines passiven Reflektors auf vorteilhafte Weise und ermöglichen eine flache Bauform des gemeinsamen Leuchtengehäuses mit besonders geringer Gehäusetiefe von vorteilhafterweise weniger als 50 mm, insbesondere weniger als 40 mm, vorzugsweise weniger als 35 mm.

Der Reflektor ist vorzugsweise dreieckig mit horizontaler Grundseite und nach oben weisender Spitze, insbesondere als im wesentlichen gleichschenkliges Dreieck ausgeführt. Das Leuchtengehäuse ist vorteilhafterweise im wesentlichen rechteckig ausgeführt und in Länge und Höhe vorzugsweise den Abmessungen des Reflektors in Länge der Grundseite und in Höhe der Dreiecksform angenähert, insbesondere nicht wesentlich größer als diese. Für die Benennung von Ausrichtungen sei dabei die typische Position der Heckleuchtenanordnung bei auf einer horizontalen Standfläche stehendem Fahrzeug angenommen.

Neben dem Reflektor ist vorteilhafterweise wenigstens ein Leuchtenfeld, vorzugsweise zwei getrennte, den Reflektor horizontal zwischen sich einschließende Leuchtenfelder ausgebildet, welche bei dreieckförmigem Reflektor und diesem eng umbeschriebenen rechteckförmigem Leuchtengehäuse vorteilhafterweise im wesentlichen dreieckig mit nach unten gerichteter Spitze geformt sind. Reflektorfläche und Leuchtenfelder ergänzen sich vorteilhafterweise im wesentlichen zu einem Viereck, insbesondere mit horizontalen oberen und unteren Kanten wie z. B. vorzugsweise zu einem Trapez oder einem Rechteck. Zwei horizontal beidseitig des Reflektors angeordnete Leuchtenfelder können Leuchtdioden auf getrennte Schaltungsplatinen aufweisen. Vorzugsweise sind solche getrennten Leuchtenfelder aber auf einer gemeinsamen Platine, welche hinter dem Reflektor durchgehend verläuft, angeordnet. In anderer Ausführung kann auch eine Form eines oder mehrerer LED-Leuchtenfelder neben dem dreieckigen Reflektor eine nicht dreieckförmige Leuchtenfeldkontur aufweisen und/oder sich mit dem Reflektor zu einer nicht rechteckigen Gehäuseform ergänzen. In wieder anderer Ausführung kann der Reflektor auch eine an sich gebräuchliche rechteckige Form mit horizontalen und vertikalen Begrenzungskanten aufweisen.

Die Dreiecksform oder eine andere Flächenform der Leuchtfelder ergibt sich für den Betrachter durch eine annähernd gleichmäßige Verteilung von mehreren Leuchtdioden zu einer Leuchtenfunktion auf den dreieckförmigen Flächen einer Schaltungsplatine neben dem Reflektor. Prinzipiell können die Leuchtdioden auf den Platinenflächen auch anders verteilt sein, die gleichmäßige Verteilung auf der dreieckförmigen Platinenfläche ist aber besonders vorteilhaft. Auf einem Leuchtenfeld können auch mehrere Leuchtenfunktionen gemeinsam realisiert sein. Die Leuchtenfunktion der Leuchtdioden im Leuchtengehäuse umfassen vorzugsweise mehrere der Funktionen von Rücklicht, Blinklicht, Bremslicht, Nebelschlussleuchte und Rückfahrscheinwerfer.

Der Reflektorkörper kann vorteilhafterweise zwischen der Schaltungsplatine und der Lichtscheibe abgestützt sein. Der Reflektorkörper deckt vorteilhafterweise nicht lichtemittierende weitere Schaltungselemente auf der Platine ab. Die Reflektorfläche ist vorteilhafterweise von der Innenfläche der Lichtscheibe beabstandet. Der Reflektor ist vorteilhafterweise in sich in der erforderlichen Signalfarbe eingefärbt. Die Lichtscheibe ist vorzugsweise farblos transparent.

Bei Anordnung eines dreieckförmigen Reflektors in gebräuchlicher Art in einem eigenen Gehäuse außerhalb eines Leuchtengehäuses einer Heckleuchtenanordnung ist vorteilhafterweise das Leuchtengehäuse wiederum mit Leuchtdioden als Lichtquellen für eine, vorzugsweise mehrere Leuchtenfunktionen bestückt. Die Bestückung mit Leuchtdioden als Lichtquellen erlaubt vorteilhafterweise eine sehr geringe Bautiefe des Leuchtengehäuses, welche nicht viel größer ist als die Bautiefe des separaten Reflektorgehäuses. Das Leuchtengehäuse ist vorteilhafterweise dem Reflektor, welcher vorzugsweise in Dreiecksform mit einer Grundkante horizontal ausgerichtet ist und dessen Seitenkanten schräg zu der nach oben weisenden Spitze verlaufen, horizontal unmittelbar benachbart. Vorteilhafterweise verläuft eine der benachbarten Seitenkante des Reflektors zugewandte erste Seitenfläche des Leuchtengehäuses im wesentlichen parallel zu der schrägen Seitenkante des Reflektors und berührt diese oder steht ihr in geringem Abstand von vorzugsweise weniger als 20 %, insbesondere weniger als 10 % der Breite des Reflektors gegenüber.

Eine dem Reflektor abgewandte zweite Seitenfläche des Leuchtengehäuses verläuft in erster vorteilhafter Ausführung im wesentlichen vertikal. In andere vorteilhafter Ausführung verläuft die zweite Seitenfläche des Leuchtengehäuses parallel zu dessen erster Seitenfläche und somit schräg gegen Vertikale und Horizontale geneigt. Eine obere und soweit gegeben eine untere Seitenfläche des Leuchtengehäuses verlaufen vorteilhafterweise im wesentlichen horizontal.

Von den Seitenflächen sei für den vertikalen horizontalen oder schrägen Verlauf die Umrisslinie des Leuchtengehäuses bei Projektion in Richtung der Flächennormalen der Lichtscheibe des Leuchtengehäuses betrachtet unabhängig von der Gestaltung der Seitenflächen in Richtung dieser Flächennormale.

Die Höhe des Leuchtengehäuses beträgt vorteilhafterweise wenigstens 75 %, insbesondere wenigstens 85 %, vorzugsweise wenigstens 95 % und höchstens 130 %, insbesondere höchstens 115 %, vorzugsweise höchstens 105 % der Höhe des Reflektors. Die Höhe des Reflektors und des Leuchtengehäuses ist vorteilhafterweise angepasst an die lichte Höhe eines U-förmig nach hinten offenen Profils als Leuchtenträger und beträgt vorteilhafterweise wenigstens 80 % dieser lichten Höhe.

In vorteilhafter Ausführung können zwei Leuchtengehäuse in unmittelbarer Nachbarschaft des Reflektors vorgesehen sein, welche horizontal gegenüberliegend beidseitig des Reflektors angeordnet sind. Die beiden gegenüber liegenden Leuchtengehäuse können auch durch eine hinter dem Reflektor durchgehende Verbindung untereinander verbunden sein. Die kumulierte Breite von Reflektor und einem oder zwei in dessen unmittelbarer Nachbarschaft angeordneter Leuchtengehäuse liegt vorteilhafterweise zwischen der einfachen und der 2,5-fachen Breite des Reflektors.

In anderer vorteilhafter Ausführung können auch zwei oder mehr Leuchtengehäuse auf derselben Seite des Reflektors angeordnet sein. Insbesondere können auch zwei separate Leuchtengehäuse übereinander seitlich des Reflektors angeordnet sein, wobei vorzugsweise beide übereinander angeordnete Leuchtengehäuse dieselbe Höhe aufweisen und sich zu einer Gesamthöhe wie oben für ein einzelnes Leuchtengehäuse angegeben ergänzen. In besonders vorteilhafter Ausführung weisen beide übereinander angeordnete Leuchtengehäuse eine parallelogrammförmige Außenkontur mit Winkeln von 60° und 120° auf.

Die Heckleuchtenanordnung kann in vorteilhafter Ausführung zusätzlich zu den Leuchtengehäusen oder anstelle eines von mehreren Leuchtengehäusen oder anstelle eines von mehreren Leuchtengehäusen in Anordnungen der beschriebenen Art ein weiteres Gehäuse oder einen gehäuseähnlichen Körper in einer einem Leuchtengehäuse nachempfundenen Form enthalten, welcher als Träger eines visuellen Musters, z. B. eines Firmenemblems oder dergleichen dienen kann.

Eine vorteilhafte Leuchte für eine Leuchtenanordnung mit wenigstens einem neben einem dreieckförmigen Reflektor diesem eng benachbart angeordneten Leuchtengehäuse weist eine Außenkontur ihres Leuchtengehäuses mit wenigstens einer ersten in Einbaulage horizontalen Kante und wenigstens einer weiteren geneigt, d. h. nicht rechtwinklig oder parallel zu der ersten Kante verlaufenden weiteren geraden Kante auf. Als Außenkontur sei dabei der Umriss des Leuchtengehäuses in Projektion in Richtung der Flächennormalen der Lichtscheibe, für Nutzfahrzeug-Heckleuchten damit typischerweise in Fahrtrichtung angesehen, wobei die Abrundung von Ecken und/oder geringe Abweichungen von geraden Kantenverläufen außer Betracht bleiben sollen.

Eine erste vorteilhafte Ausführungsform einer solchen Außenkontur kann dabei durch eine Dreieckform mit in Einbaulage der Leuchte einer horizontalen, einer vertikalen und einer gegen diese geneigten Kante oder einer horizontalen Kante und zwei vorzugsweise symmetrisch gegen diese geneigten Kanten, insbesondere unter Bildung einer gleichseitigen Dreieckform, gegeben sein.

In anderer vorteilhafter Ausführungsform kann die Kontur trapezförmig sein mit zwei in Einbaulage horizontalen parallelen Kanten und wenigstens einer gegen diese geneigten weiteren geraden Kante. Eine vierte Kante kann, insbesondere unter Bildung einer gleichschenkligen Trapezform gleichfalls gegen die horizontalen Kanten geneigt verlaufen, oder in bevorzugter Ausführung senkrecht zu den beiden horizontalen Kanten, also vertikal in Einbaulage verlaufen.

Der spitze Winkel einer gegen die horizontalen Kanten geneigt verlaufenden geraden Kante gegen die horizontalen Kanten liegt vorteilhafterweise zumindest annähernd bei 60°.

Eine besonders vorteilhafte Ausführung sieht eine Kontur des Leuchtengehäuses in Form eines nicht rechtwinkligen Parallelogramms, insbesondere mit Winkeln von 60° und 120°, vor. In bevorzugter Ausführungsform liegt das Verhältnis der Längen von kurzer zu langer Parallelogrammkante zwischen 0,4 und 0,5, so dass vorteilhafterweise in einer ersten Einbaulage die kurzen Kanten horizontal und die langen Kanten geneigt verlaufen, wobei der vertikale Abstand der horizontal verlaufenden Kanten vorteilhafterweise innerhalb des beschriebenen Höhenbereichs ungefähr gleich der Höhe eines benachbart anzuordnenden Dreieckreflektors oder Dreieckgehäuses ist. In anderer vorteilhafter Einbaulage verlaufen die langen Kanten des Parallelogramms horizontal und sind zwei gleiche Leuchtengehäuse übereinander angeordnet mit im wesentlichen fluchtend ausgerichteten kurzen Kanten. Die beiden prallelogrammförmigen Leuchtengehäuse ergänzen sich dabei zu einem größeren Parallelogramm mit einer Gesamtbauhöhe, welche wiederum annähernd gleich der Höhe eines benachbart anzuordnenden Dreieckreflektors ist.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Zusammenstellung mehrerer Elemente einer ersten Heckleuchtenanordnung,
- Fig. 2: eine zusammengesetzte Heckleuchtenanordnung nach Fig. 1,
- Fig. 3: eine Rückseite der Heckleuchtenanordnung nach Fig. 2,
- Fig. 4: einen Schnitt durch die Heckleuchtenanordnung nach Fig. 2,
- Fig. 5: ein Leuchtengehäuse mit anderer Außenkontur,
- Fig. 6: ein trapezförmiges Leuchtengehäuse,
- Fig. 7: ein Leuchtengehäuse mit runder Außenkontur,
- Fig. 8: ein Leuchtengehäuse neben einem Reflektor,
- Fig. 9: einen Reflektor und zwei Leuchtengehäuse,
- Fig. 10: eine weitere Gehäuseform neben einem Reflektor,
- Fig. 11: eine bevorzugte parallelogrammförmige Gehäuseform,
- Fig. 12: unterschiedliche Kombinationen eines parallelogrammförmigen Leuchtengehäuses mit weiteren Gehäusen und einem Reflektor

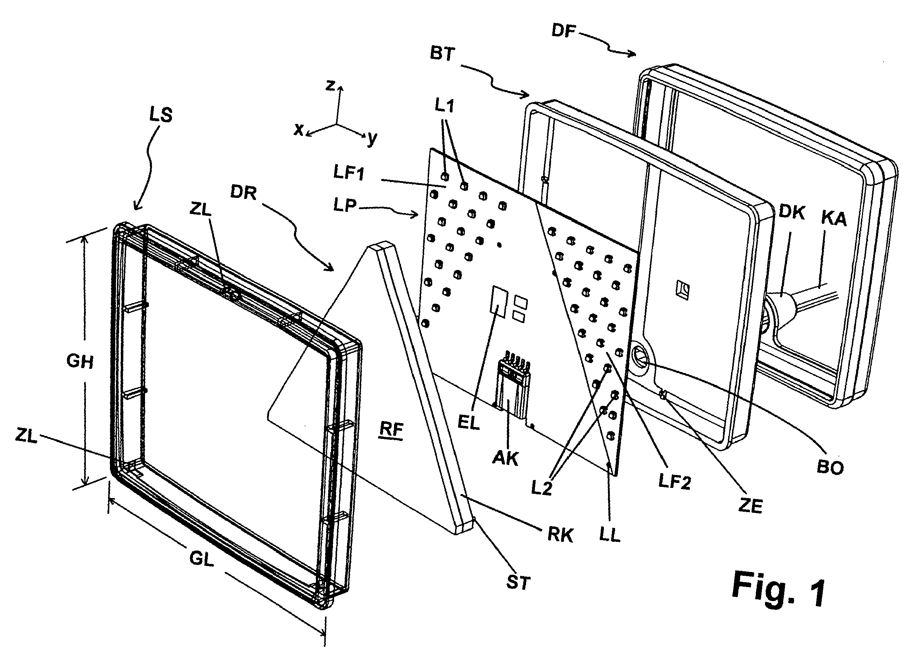

Die Heckleuchtenanordnung nach Fig. 1 weist ein zweiteiliges Gehäuse mit einer transparenten Lichtscheibe LS und einem topfförmigen Bodenteil BT auf, welche in x-Richtung des mit eingezeichneten rechtwinkligen Koordinatensystems zusammenfügbar sind und dabei eine umlaufende Gehäusefuge GF ausbilden und einen Innenraum allseitig umschließen.

Lichtscheibe einerseits und Bodenteil andererseits sind vorteilhafterweise aus unterschiedlichen Materialien hergestellt, insbesondere als Spritzgussteile aus Kunststoff.

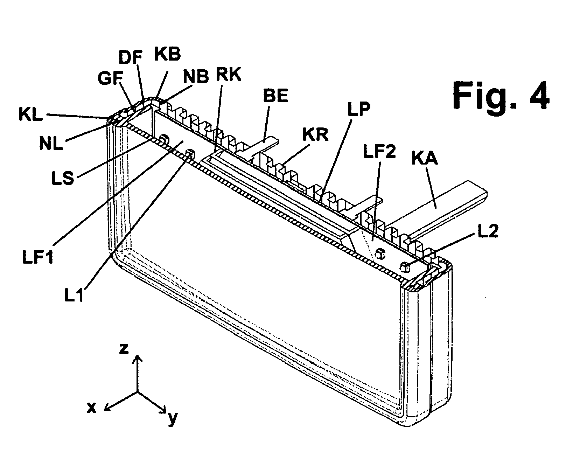

Die umlaufende Gehäusefuge GF zwischen Lichtscheibe und Bodenteil weist vorteilhafterweise nach Art einer Labyrinthdichtung im Querschnitt nach Fig. 4 unterschiedliche Ausrichtungen von gegenüberstehenden Fugenflächen auf. Die Gehäusefuge ist außen vollständig von einem Dichtungskörper DF umschlossen, welcher nach dem Zusammenfügen von Lichtscheibe und Bodenteil im Spritzgussverfahren aufgebracht ist. Der Dichtungskörper reicht vorteilhafterweise von der Gehäusefuge entlang der Außenfläche der Lichtscheibe bis zu einer Kante KL und/oder entlang der Außenfläche des Bodenteils zu einer Kante KB und umgreift diese Kante(n). Vorteilhafterweise ist nach der Kante KL bzw. KB noch eine Nut NL bzw. NB vorgesehen, in welche der Dichtungskörper DF eingreift. Durch Kante(n) und/oder Nute(n) ergibt sich eine lange Kontaktfläche und eine gute mechanische Verankerung des Dichtungskörpers an Lichtscheibe bzw. Bodenteil.

Das Leuchtengehäuse weist vorteilhafterweise in Haupt-Abstrahlrichtung x eine geringe Gehäusetiefe GT von vorteilhafterweise weniger als 50 mm, insbesondere weniger als 40 mm, vorzugsweise weniger als 35 mm.
Das Bodenteil weist eine von der Gehäusefuge getrennte bzw. beabstandete Öffnung BO zur Durchführung eines mehradrigen Kabels KA auf. Der Spalt zwischen Kabel KA und Öffnung BO ist vorteilhafterweise durch einen an der Außenseite des Bodenteils um die Öffnung BO und an dem Kabelmantel des Kabels KA anliegenden weiteren Dichtungskörper DK abgedichtet, welcher vorteilhafterweise gleichfalls im Spritzgussverfahren an Kabel und Bodenteil angespritzt ist Vorteilhafterweise ist der Dichtungskörper DK aus demselben Material wie der Dichtungskörper DF entlang der Gehäusefuge GF. Vorzugsweise sind der Dichtungskörper DK an der Kabeldurchführung und der Dichtungskörper DF entlang der Gehäusefuge als einstückiger Dichtungskörper miteinander verbunden. Vorteilhafterweise ist die Öffnung BO im Bodenteil in dessen Rückwandfläche angeordnet. Vorteilhafterweise ist die Position der Öffnung BO in der Rückwandfläche aus der Flächenmitte der Rückwand versetzt angeordnet und liegt vorzugsweise näher am Rand der Rückwandfläche als an deren Flächenmitte.

Der Dichtungskörper DF entlang der Gehäusefuge und/oder der Dichtungskörper DK an der Kabeldurchführung bestehen vorteilhafterweise aus einem spritzgussfähigen thermoplastischen Elastomer. Das thermoplastische Elastomer kann vorteilhafterweise haftvermittelnde Zusatzstoffe enthalten, welche auf die Materialien von Lichtscheibe und Bodenteil an der Gehäusefuge bzw. Kabelmantel und Bodenteil an der Kabeldurchführung abgestimmt sind. Derartige haftvermittelnde Zusatzstoffe für thermoplastische Elastomere sind an sich in großer Variation bekannt. Die Verwendung eines thermoplastischen Elastomers mit haftvermittelnden Zusatzstoffen ist für ein derart abgedichtetes Leuchtengehäuse von besonderem Vorteil, da die dauerhafte Elastizität des nach dem Spritzgussvorgang abgekühlten Dichtungskörper eine gute Abdichtung auch bei unterschiedlichem thermischem Verhalten der unterschiedlichen Materialien gewährleistet.

Bei der in Fig. 1 skizzierten Heckleuchte ist auf einer Leiterplatte PLD eine Lichtquellenanordnung mit zwei getrennten Leuchtenfeldern LF1, LF2 mit Lichtquellen L1 bzw. L2 vorgesehen. Jedes der beiden Leuchtenfelder enthält vorteilhafterweise in flächig verteilter Anordnung eine Mehrzahl von einzelnen Leuchtdioden als Lichtquellen. Die beiden Leuchtenfelder sind vorteilhafterweise auf einer gemeinsamen Platine angeordnet. Im Innenraum der Heckleuchte ist zusätzlich ein Reflektor DR vorgesehen, dessen Reflektorfläche RF im wesentlichen die Form eines Dreiecks, insbesondere eines gleichschenkligen, vorzugsweise eines gleichseitigen Dreiecks mit horizontaler Grundseite aufweist. Der Reflektor DR enthalte im skizzierten Beispiel einen zweiteiligen Reflektorkörper RK.

Ferner sind auf der Leiterplatte ein Anschlussklemmblock AK, über welchen Adern eines Anschlusskabels AK mit Leiterbahnen der Leiterplatte verbunden sind, und eine Elektronik EL zur Ansteuerung der Leuchtdioden, z. B. zur Einregelung einer von der Eingangsspannung unabhängigen Ausgangsspannung, eines Konstantstroms usw. vorgesehen. Die vorteilhafterweise aus Isoliermaterial mit metallischen Leiterbahnen bestehende Leiterplatte LP ist vorteilhafterweise auf einer wärmespreizend wirkenden Trägerplatte WP, beispielsweise aus Aluminium angeordnet, welche vorteilhafterweise ihrerseits mit dem Kunststoffmaterial des Bodenteils möglichst flächig in Kontakt stehen kann.

Die Plattenanordnung mit Trägerplatte und Leiterplatte können über am Bodenteil angeformte Zentrierelememte ZE in der y-z-Ebene in definierter Position gehalten sein, was insbesondere beim Zusammenbau von Vorteil sein kann.

Vorteilhafterweise weist die Leiterplatte ZP im wesentlichen den Umriss eines Rechtecks auf, dessen horizontale Kanten (y-Richtung) annähernd so lang wie die Grundseite der Dreiecksfläche des Reflektors, vorteilhafterweise maximal 50 %, insbesondere maximal 25 %, vorzugsweise maximal 15 % länger als die Grundseite RL der Dreiecksfläche des Reflektors sind. Vorteilhafterweise entspricht die Länge der vertikalen Kanten (z-Richtung) der Leiterplatte, d. h. deren Höhe, im wesentlichen der Höhe RH der Dreiecksfläche des Reflektors, vorteilhafterweise mit einer Abweichung von weniger als 30 %, insbesondere weniger als 20 %, vorzugsweise weniger als 10 %. Die Leuchtfelder LF1, LF2 sind vorzugsweise im wesentlichen dreieckig. Die Lichtscheibe LS ist vorteilhafterweise farblos transparent. Die Fläche der Leiterplatte kann vorteilhafterweise eingefärbt sein, vorzugsweise weisen die getrennten Leuchtenfelder unterschiedliche Farbtöne auf.

Der Querschnitt des Leuchtengehäuses mit Lichtscheibe LS und Bodenteil BT ist vorteilhafterweise gleichfalls im wesentlichen rechteckig und vorteilhafterweise in horizontaler y-Richtung mit einer Länge GL um maximal 50 %, insbesondere maximal 25 %, vorzugsweise maximal 15 % größer als die Grundseite der Reflektorfläche mit einer Länge RL und/oder in vertikaler Richtung mit einer Höhe GH um maximal 35 %, insbesondere um maximal 25 %, vorzugsweise maximal 15 % größer als die Höhe RH der Reflektorfläche.

Die getrennten Leuchtenfelder sind vorteilhafterweise für unterschiedliche Beleuchtungsfunktionen vorgesehen, wobei auch innerhalb eines Leuchtenfelds noch unterschiedliche Beleuchtungsfunktionen realisiert sein können. Beispielsweise kann ein erstes Leuchtenfeld LF1 mit Lichtquellen L1 für die Blinklichtfunktion und ein zweites Leuchtenfeld LF2 mit Lichtquellen L2 für die Fahrlichtfunktion und die Bremslichtfunktion vorgesehen sein.

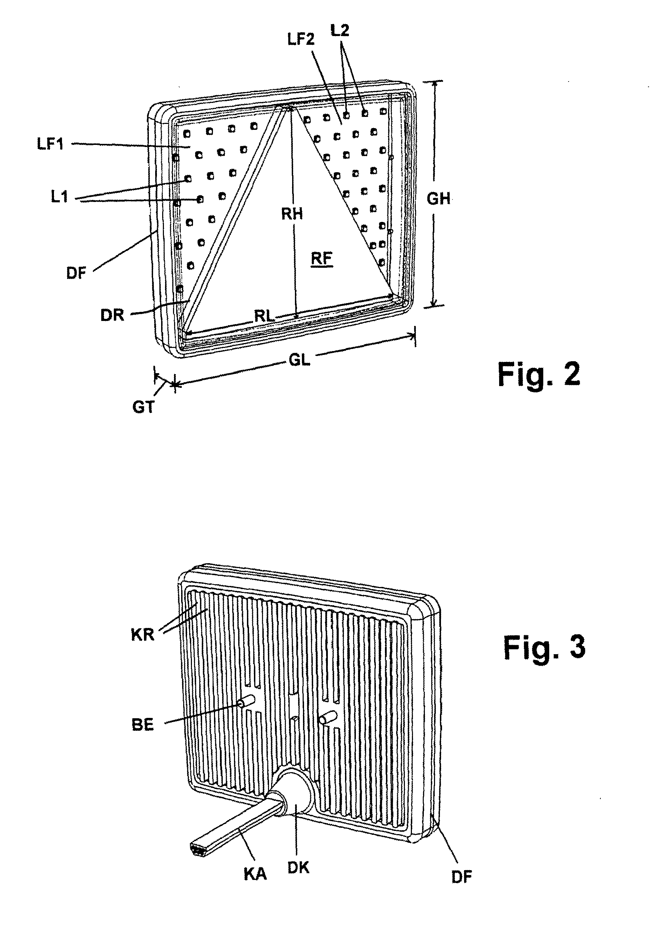

Fig. 2 veranschaulicht in einer Schrägansicht einer zusammengesetzten Heckleuchte nach Fig. 1 die relativen Flächenverhältnisse des im wesentlichen dreieckförmigen Reflektors DR, der Platinen-Leuchtflächen LF1, LF2 mit den Flächen verteilten Leuchtelementen L1 bzw. L2 und des gesamten Leuchtengehäuses. Der Breite und Höhe des Innenraums des Leuchtengehäuses sind im wesentlichen gleich mit der Länge RL der unteren Dreieckseite und der Höhe RH des Reflektors DR und nur geringfügig größer als diese Maße, welche über die Dicke der Seitenwände von Lichtscheibe und Bodenteil und des Dichtungskörpers DF auch die Außenmaße GL und GH des Leuchtengehäuses bestimmen. Im skizzierten Beispiel weist die Kontur des Leuchtengehäuses gegenüber einer rechteckigen Form gerundete Ecken und leicht nach außen gewölbte Seiten auf.

Der Reflektor DR ist vorzugsweise als gesondertes Bauteil in Form eines Reflektorkörpers RK zwischen Leiterplatte LP und Lichtscheibe eingefügt und durch Zentrierelemente, z. B. Führungselemente ZL an der Lichtscheibe oder Stifte ST zum Eingriff in Löcher LL in der Leiterplatte LP in y- und z-Richtung in definierter Position gehalten.

Fig. 3 zeigt die Heckleuchtenanordnung nach Fig. 2 von hinten und veranschaulicht insbesondere die Struktur von Kühlrippen KR an der Rückwand und den Anschluss des Kabels KA über den Dichtungskörper DK sowie die Befestigungselemente BE.

Fig. 4 zeigt eine Schrägansicht einer auf halber Höhe horizontal geschnittenen Heckleuchte nach Fig. 2, aus welcher die Lage der einzelnen Bestandteile in Haupt-Abstrahlrichtung x anschaulich entnehmbar ist. Fig. 4 veranschaulicht auch die Lage der in die Rückwand des Bodenteils integrierten Befestigungselemente BE, insbesondere Gewinde-Kopfbolzen.

Die der Dreieckfläche des Reflektors eng umschriebene Rechteckkontur der Leiterplatte bzw. des Leuchtengehäuses ergibt eine Heckleuchtenanordnung mit integriertem Standard-Reflektor und gleichzeitig kleinem Einbaumaß und besonders günstiger Ausnutzung der Querschnittsfläche des Leuchtengehäuses für verschiedene Funktionen.

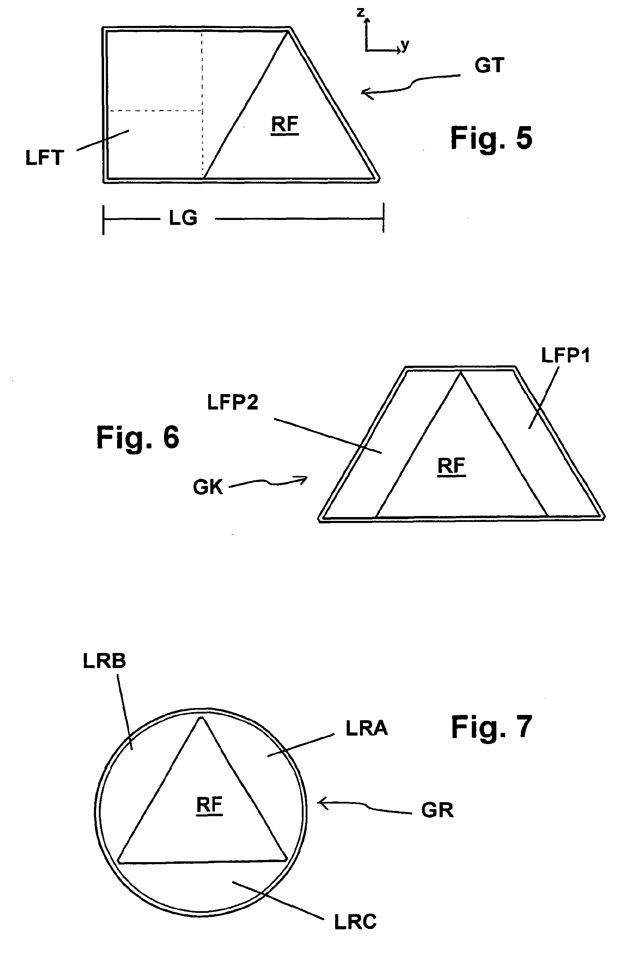

Die Fig. 5 zeigt eine alternative Ausführungsform eines Leuchtengehäuses GT mit einem integrierten Reflektor RF mit Blickrichtung in Richtung der Flächennormale von Lichtscheibe LS bzw. Reflektorfläche RF, d. h. in x-Richtung nach Fig. 1. Dargestellt sind schematisch die Umrisse des Leuchtengehäuses GT und des Reflektors RF sowie eine mögliche Unterteilung des Leuchtenfeldes LFT in verschiedene Teilfelder, welche unterschiedlichen Beleuchtungsfunktionen zugeordnet sein können. Die mögliche Unterteilung des Leuchtenfeldes LFT ist durch unterbrochene Linien angedeutet. Selbstverständlich sind für eine solche Unterteilung eine Vielzahl von Möglichkeiten gegeben und Lichtquellen zu verschiedenen Leuchtenfunktionen können auch in derselben Fläche ineinander geschachtelt vorliegen. Für die Länge LG des Gehäuses ist hier typischerweise ein geringfügig größerer Wert anzunehmen als für die Ausführungsform nach den vorangegangenen Figuren. In Fig. 6 ist eine Ausführungsform skizziert, bei welcher innerhalb eines gleichschenklig-trapezförmigen Leuchtengehäuses GK horizontal (y-Richtung) zu beiden Seiten des in das Gehäuse integrierten Reflektors RF Leuchtflächen LFP1 bzw. LFP2 auf einer vorzugsweise hinter dem Reflektor durchgehenden Platine vorgesehen sind. Die Leuchtflächen LFP1, LFP2 können wiederum für verschiedene Leuchtenfunktionen flächig unterteilt sein. In einer anderen, nicht skizzierten Ausführungsform kann vorsehen, dass nur eine der parallelogrammförmigen Leuchtflächen LFP1 oder LFP2 neben der Reflektorfläche RF vorgesehen ist.

In Fig. 7 ist eine weitere günstige Ausführungsform vorgesehen, bei welcher das Leuchtengehäuse GR im wesentlichen eine kreisrunde Kontur hat, welcher die Reflektorfläche RF mit vorzugsweise geringem radialem Freiraum zwischen den Spitzen der dreieckförmigen Reflektorfläche und dem Innenumfang des runden Leuchtengehäuses GR in dieses integriert ist. Leuchtenfelder LRA, LRB und LRC haben im wesentlichen die Form von Kreisabschnitten.

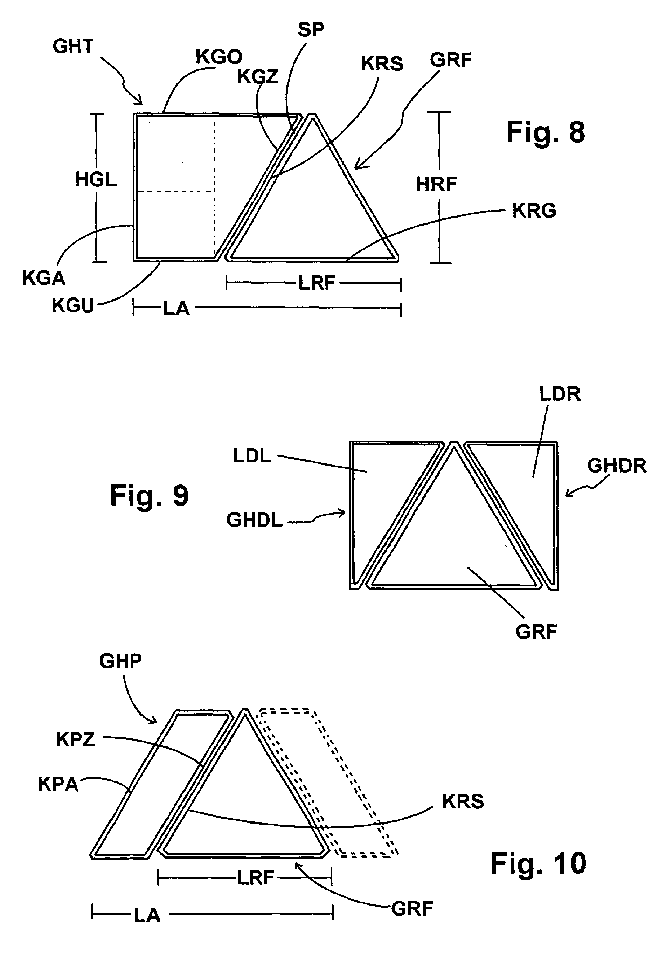

Bei einem außerhalb des Leuchtengehäuses angeordneten , diesem in horizontaler Richtung eng benachbarten Reflektor insbesondere mit eigenem Reflektorgehäuse GRF ist vorteilhafterweise eine einer schrägen Kante KRS des Reflektors bzw. Reflektorgehäuses GRF zugewandte und gleichfalls schräg und im wesentlichen parallel zu der Kante KRS verlaufende Seitenfläche KGZ des Leuchtengehäuses GHT, wie in Fig. 8 skizziert, vorgesehen. Der Spalt SP zwischen der schrägen Kante KRS des Reflektors bzw. Reflektorgehäuses GRF und der schrägen Gehäusefläche KGZ des Leuchtengehäuses GHT ist vorteilhafterweise in horizontaler y-Richtung kleiner als 20 %, insbesondere kleiner als 10 % der Länge LRF der Grundkante des Reflektorgehäuses GRF.

Das horizontal zum Reflektor benachbart angeordnete Leuchtengehäuse GHT weist vorteilhafterweise im wesentlichen horizontale obere und untere Seitenflächen KGO bzw. KGU auf. Die Höhe HGL des Leuchtengehäuses beträgt vorteilhafterweise wenigstens 75 %, insbesondere wenigstens 85 % und vorteilhafterweise höchstens 130 %, insbesondere höchstens 115 % der Höhe KRF des Reflektorgehäuses GRF und ist vorzugsweise annähernd gleich groß wie die Höhe des Reflektorgehäuses. Die Gesamtlänge LA der Leuchtenanordnung liegt vorteilhafterweise zwischen dem einfachen und dem 2,5-fachen der Länge der Grundkante KRG des Reflektorgehäuses GRF.

In der in Fig. 8 skizzierten vorteilhaften Ausführungsform ist eine dem Reflektor abgewandte Seitenfläche KGA des Leuchtengehäuses GHT im wesentlichen vertikal verlaufend.

Fig. 9 zeigt eine Ausführungsform einer Heckleuchtenanordnung wieder mit Blickrichtung in x-Richtung senkrecht auf die Lichtscheibe eines Leuchtengehäuses bzw. die Reflektorfläche eine Heckleuchtenanordnung, bei welcher seitlich neben einem Reflektorgehäuse GRF zwei getrennte Leuchtengehäuse GHDR und GHDL angeordnet sind, welche im wesentlichen dreieckförmig mit nach unten gerichteter Spitze sind und die Dreieckfläche des Reflektorgehäuses GRF zu einem im wesentlichen rechteckigen Gesamtumriss ergänzen. Die Anordnung der Leuchtenfelder LDR im Leuchtengehäuse GHDR und LDL im Leuchtengehäuse GHDL kann dabei im wesentlichen der Anordnung nach Fig. 1 entsprechen. Die Leuchtengehäuse GHDR und GHDL können hinter dem Reflektorgehäuse GRF untereinander verbunden sein. Die beiden Leuchtengehäuse haben getrennte Lichtscheiben über den Leuchtenfeldern.

In Fig. 10 ist eine Heckleuchtenanordnung skizziert, bei welcher neben einem dreieckförmigen Reflektorgehäuse GRF ein parallelogrammförmiges Leuchtengehäuse für Leuchtdioden zu vorzugsweise mehreren Beleuchtungsfunktionen vorgesehen ist. Eine dem Reflektor zugewandte Seitenfläche KPZ des Leuchtengehäuses GHP verläuft im wesentlichen parallel zu der schrägen Seitenkante KRS des Reflektorgehäuses GRF. Eine dem Reflektor abgewandte Seitenfläche KPA des Leuchtengehäuses GHP verläuft in diesem skizzierten Beispiel gleichfalls im wesentlichen parallel zu der schrägen Seitenkante KRS des Reflektorgehäuses GRF. Mit unterbrochener Linie angedeutet ist die Möglichkeit, auch auf der horizontal gegenüber liegenden Seite des Reflektors ein weiteres Leuchtengehäuse, beispielsweise wiederum in Parallelogrammform anzubringen. Die einzelnen Leuchtengehäuse können auch in anderer Zusammenstellung kombiniert sein, beispielsweise durch symmetrische Ausführung der Anordnungen nach Fig. 5 oder Fig. 8, durch Anordnung zweier parallelogrammförmiger Leuchtenfelder oder Gehäuse auf einer Seite des Reflektors, auch in Form von übereinander angeordneten parallelogrammförmigen Leuchtenfeldern oder Gehäusen mit langen horizontalen und kurzen schrägen Kanten. Insbesondere die parallelogrammförmigen Leuchtenfelder oder Leuchtengehäuse nach Art von LFP1, LFP2 in Fig. 6 bzw. GHP von Fig. 10 sind besonders vorteilhaft in verschiedener Anordnung mit dem Reflektor kombinierbar. In bevorzugter Ausführungsform ist die lange Seite des Parallelogramms annähernd doppelt so groß wie die kurze Seite. Die spitzen Parallelogrammwinkel sind gleich dem Winkel zwischen Seite und Basis des dreieckförmigen Reflektors, der vorzugsweise gleichseitig geformt ist.

In vorteilhafter Weiterbildung können auch mehrere getrennte Teilflächen einer Anordnung in demselben oder in getrennten Leuchtengehäusen derselben Leuchtenfunktion zugeordnet sein.

Teile der Flächen des Leuchtengehäuses können auch als nicht leuchtende Flächen ausgeführt und z. B. mit einem Muster, z. B. einem Firmenlogo bedruckt sein. Bei einer Anordnung mit mehreren Gehäusen neben einem Reflektor kann auch ein Gehäuse anstelle einer Leuchtenfunktion ein derartiges Muster enthalten.

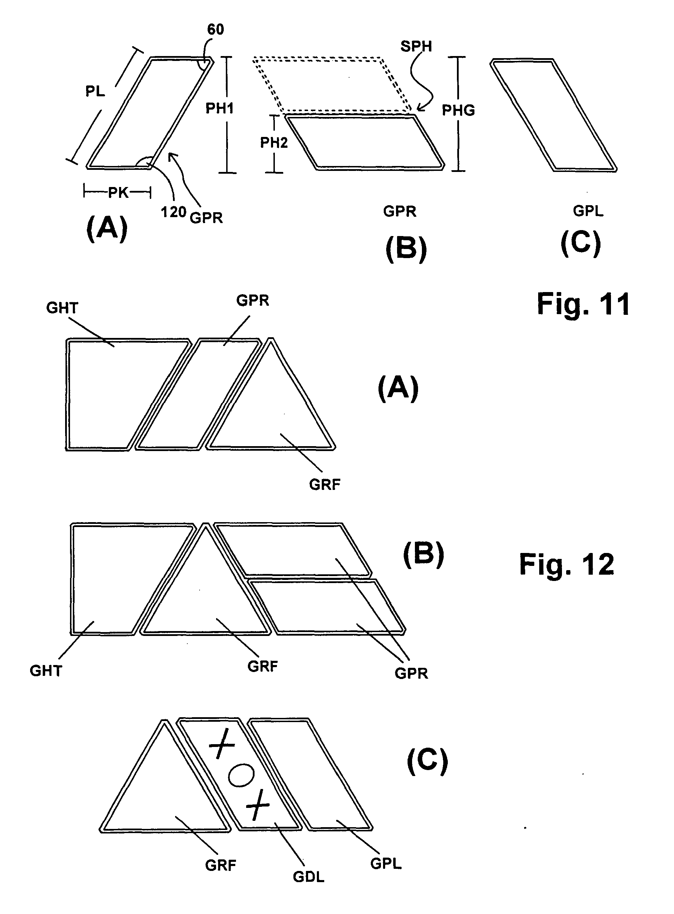

Fig. 11 zeigt schematisch in Draufsicht auf die Lichtscheibe eine bevorzugte Ausführung eines Leuchtengehäuses GPR mit parallelogrammförmiger Außenkontur, wobei die Eckwinkel des Parallelogramms vorzugsweise zumindest annähernd 60° und 120° betragen. Das Verhältnis der Länge PK der kurzen Kante zur Länge PL der langen Kante der Parallelogrammform liegt vorteilhafterweise zwischen PK/PL = 0,4 und PK/PL = 0,5. Das parallelogrammförmige Leuchtengehäuse ist in Fig. 11 (A) in einer ersten Einbaulage mit horizontalem Verlauf der kurzen Parallelogrammkanten gezeichnet, in welchem die Höhe PH1 des Leuchtengehäuses annähernd gleich der Höhe eines benachbart anzuordnenden Dreieckreflektors ist.

Fig. 11 (B) zeigt das parallelogrammförmige Leuchtengehäuse in einer zweiten Einbaulage mit horizontalem Verlauf der langen Kanten. Die Gehäusehöhe PH2 ist hier geringer und liegt vorzugsweise zwischen 40 % und 50 % der Gehäusehöhe PH1 in der Einbaulage nach Fig. 11 (A). Vorteilhafterweise kann ein zweites gleiches Gehäuse in gleicher Einbaulage in der mit unterbrochener Linie gezeichneten Position angeordnet werden, in welcher die einander zugewandten horizontalen Kanten der beiden übereinander angeordneten Leuchtengehäuse in geringem vertikalen Abstand an einem Spalt SPH gegenüberstehen und die gegen die Horizontale geneigt verlaufenden kurzen Kanten der beiden übereinander angeordneten Leuchtengehäuse fluchtend ausgerichtet sind. Die beiden übereinander angeordneten Leuchtengehäuse bilden gemeinsam ein größeres Parallelogramm mit einer Gesamthöhe PHG, welche annähernd gleich PH1 ist.

In Fig. 11 (C) ist ein Leuchtengehäuse GPL mit zu Fig. 11 (A) spiegelsymmetrischer Parallelogrammform skizziert. Zwei zueinander spiegelsymmetrische Leuchtengehäuse GPR, GPL sind in der Regel erforderlich, wenn zu beiden Seiten des Fahrzeugs die Heckleuchtenanordnung zumindest in wesentlichen Teilen spiegelsymmetrisch sein soll.

In Fig. 12 sind zur Veranschaulichung der besonderen Vorteile eines parallelogrammförmigen Leuchtengehäuses nach Fig. 11 in der Verwendung einer kompakten Heckleuchtenanordnung mit Dreieckreflektor einige Beispiele für aus mehreren Leuchtengehäusen und einem Dreieckreflektor zusammengesetzte Heckleuchtenanordnungen skizziert.

In Fig. 12 (A) sind auf derselben Seite des Dreieckreflektors an diesen anschließend ein parallelorammförmiges Leuchtengehäuse GPR und auf dieses nach links folgend ein trapezförmiges Leuchtengehäuse GHT angeordnet, wobei Reflektor und beide Leuchtengehäuse zumindest annähernd gleiche Höhen aufweisen.

Fig. 12 (B) zeigt eine Anordnung mit einem trapezförmigen Leuchtengehäuse GHT und zwei übereinander angeordneten parallelogrammförmigen Leuchtengehäusen GPR in zweiter Einbaulage nach Fig. 11 (B).

Fig. 12 (C) zeigt eine Anordnung mit einem Dreieckreflektor GRF, einem an diesen anschließendes trapezförmiges Gehäuse GDL und auf dieses nach rechts folgend ein parallelogrammförmiges Leuchtengehäuse GPL. Das Gehäuse GDL weise eine einem Leuchtengehäuse GPL nachempfundene Form auf und sei an die Stelle, welche auch von einem Leuchtengehäuse eingenommen werden könnte innerhalb der Heckleuchtenanordnung angeordnet. In dem Gehäuse GDL sei durch Symbole X, O. X angedeutet ein visuell erkennbares Flächenmuster, z. B. ein Firmenlogo oder dergleichen angebracht.

Die Beispiele sind offensichtlich um weitere abgewandelte Kombinationen aus Dreieckreflektor und Leuchtengehäusen erweiterbar und zeigen die Variabilität der möglichen Zusammensetzungen mit wenigen Grundformen von Gehäusen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Heckleuchtenanordnung für Fahrzeuge, insbesondere für Nutzfahrzeuge, mit mehreren Leuchtenfunktionen, mit wenigstens einem Leuchtengehäuse, welches ein Bodenteil und eine transparente Lichtscheibe und Leuchtdioden als Lichtquelle für wenigstens eine Leuchtenfunktion enthält, und mit einem Reflektor, **dadurch gekennzeichnet, dass** das wenigstens eine Leuchtengehäuse die Leuchtdioden und einen Reflektor hinter einer gemeinsamen Lichtscheibe enthält.

2. Anordnung nach Anspruch 1, **dadurch gekennzeichnet, dass** der Reflektor dreieckig mit nach oben weisender Spitze ausgeführt ist.

3. Anordnung nach Anspruch 1 oder 2, **dadurch gekennzeichnet, dass** das Leuchtengehäuse im wesentlichen rechteckige Form besitzt.

4. Anordnung nach Anspruch 3, **dadurch gekennzeichnet, dass** in wenigstens einer der zwischen Reflektor und Seitenwand des Leuchtengehäuses liegenden Flächenbereiche ein Leuchtenfeld mit mehreren auf einer Schaltungsplatine angeordneten Leuchtdioden ausgebildet ist.

5. Anordnung nach Anspruch 4, **dadurch gekennzeichnet, dass** das Leuchtenfeld im wesentlichen dreieckförmig mit nach unten weisender Spitze geformt ist.

6. Anordnung nach Anspruch 4 oder 5, **dadurch gekennzeichnet, dass** zwei den Reflektor zwischen sich einschließende getrennte Leuchtenfelder vorhanden sind.

7. Anordnung nach Anspruch 6, **dadurch gekennzeichnet, dass** die getrennten Leuchtfelder unterschiedlichen Leuchtenfunktionen zugeordnet sind.

8. Anordnung nach Anspruch 6 oder 7, **dadurch gekennzeichnet, dass** die getrennten Leuchtenfelder auf einer gemeinsamen Schaltungsplatine angeordnet sind.

9. Anordnung nach einem der Ansprüche 4 bis 8, **dadurch gekennzeichnet, dass** der Reflektor zwischen Schaltungsplatine und Lichtscheibe angeordnet ist.

10. Anordnung nach Anspruch 6 oder 7, **dadurch gekennzeichnet, dass** der Reflektor nicht lichtemittierende Schaltungselemente einer Schaltungsplatine verdeckt.

11. Anordnung nach einem der Ansprüche 1 bis 10, **dadurch gekennzeichnet, dass** die Lichtscheibe einheitlich farblos transparent ist.

12. Anordnung nach einem der Ansprüche 1 bis 11, **dadurch gekennzeichnet, dass** die Länge des Leuchtengehäuses um maximal 50 %, insbesondere maximal 25 %, vorzugsweise maximal 15 % größer ist als die Länge der Grundseite des Reflektors.

13. Anordnung nach einem der Ansprüche 1 bis 11, **dadurch gekennzeichnet, dass** die Höhe des Leuchtengehäuses maximal 35 %, insbesondere maximal 25 %, vorzugsweise maximal 15 % größer ist als die Höhe des Reflektors.

14. Anordnung nach einem der Ansprüche 1 bis 13, **dadurch gekennzeichnet, dass** die Höhe des Leuchtengehäuses zwischen 75 % und 100 % der Länge des Leuchtengehäuses beträgt.

15. Heckleuchtenanordnung für Fahrzeuge, insbesondere für Nutzfahrzeuge, mit wenigstens einem Leuchtengehäuse, welches ein Bodenteil und eine transparente Lichtscheibe und Leuchtdioden als Lichtquelle für wenigstens eine Leuchtenfunktion enthält, und mit einem Reflektor in Dreiecksform mit horizontaler Grundkante und schräg verlaufenden Seitenkanten, **dadurch gekennzeichnet, dass** das wenigstens eine Leuchtengehäuse horizontal benachbart zu dem Reflektor angeordnet ist und dem Reflektor zugewandt eine erste Seitenfläche aufweist, welche im wesentlichen parallel zu der Seitenkante des Reflektors verläuft.

16. Anordnung nach Anspruch 15, **dadurch gekennzeichnet, dass** eine dem Reflektor abgewandte zweite Seitenfläche des Leuchtengehäuses im wesentlichen vertikal verläuft.

17. Anordnung nach Anspruch 15, **dadurch gekennzeichnet, dass** eine dem Reflektor zugewandte Seitenfläche des Leuchtengehäuses parallel zu der ersten Seitenfläche verläuft.

18. Anordnung nach einem der Ansprüche 15 bis 17, **dadurch gekennzeichnet, dass** die Höhe des Leuchtengehäuses zwischen wenigstens 75 %, insbesondere wenigstens 85 %, vorzugsweise wenigstens 95 % und höchstens 130 %, insbesondere höchstens 115 %, vorzugsweise höchstens 105 % der Höhe des Reflektors beträgt.

19. Anordnung nach einem der Ansprüche 15 bis 18, **dadurch gekennzeichnet, dass** zwei Leuchtengehäuse horizontal gegenüber liegend beidseits des Reflektors angeordnet sind.

20. Anordnung nach einem der Ansprüche 15 bis 19, **dadurch gekennzeichnet, dass** die kumulierte Breite von Reflektor und einem bzw. zwei Leuchtengehäusen zwischen der einfachen und der 2,5-fachen Breite des Reflektors ist.

21. Anordnung nach einem der Ansprüche 15 bis 20, **dadurch gekennzeichnet, dass** auf wenigstens einer Seite des Reflektors zwei Leuchtengehäuse übereinander angeordnet sind, welche dem Reflektor zugewandt jeweils eine erste Seitenfläche aufweisen, welche im wesentlichen parallel zu der Seitenkante des Reflektors verlaufen.

22. Anordnung nach Anspruch 21, **dadurch gekennzeichnet, dass** beide Leuchtengehäuse die gleiche Höhe aufweisen.

23. Anordnung nach einem der Ansprüche 15 bis 22, **dadurch gekennzeichnet, dass** ein Leuchtengehäuse eine Kontur in Form eines Parallelogramms aufweist.

24. Leuchte für eine Heckleuchtenanordnung für Fahrzeuge, insbesondere Nutzfahrzeuge, mit einem Leuchtengehäuse, welches ein Bodenteil und eine transparente Lichtscheibe und Leuchtdioden als Lichtquellen für wenigstens eine Leuchtenfunktion enthält, **dadurch gekennzeichnet, dass** die Kontur des Leuchtengehäuses wenigstens eine in Einbaulage im wesentlichen horizontale erste Kante aufweist und eine weitere gerade Kante gegen dies erste Kante geneigt verläuft.

25. Leuchte nach Anspruch 24, **dadurch gekennzeichnet, dass** eine zweite gerade Kante parallel zu der ersten Kante verläuft.

26. Leuchte nach Anspruch 24 oder 25, **dadurch gekennzeichnet, dass** die weitere gerade Kante Winkel von 60° bzw. 120° mit den beiden horizontalen Kanten bildet.

27. Leuchte nach Anspruch 25, **dadurch gekennzeichnet, dass** eine vierte Kante senkrecht zu erster und zweiter Kante verläuft.

28. Leuchte nach Anspruch 25 und Anspruch 26, **dadurch gekennzeichnet, dass** eine vierte Kante parallel zu der weiteren Kante verläuft und die Kontur ein Parallelogramm bildet.

29. Leuchte nach Anspruch 28, **dadurch gekennzeichnet, dass** das Verhältnis der Längen der kürzeren Kanten zu den längeren Kanten zwischen 0,4 und 0,5 liegt.
